# EUROPEAN PATENT SPECIFICATION

(11) **EP 1 816 403 B1**
(45) Date of publication and mention of the grant of the patent: **16.05.2012**
(21) Application number: 06256300.2
(22) Date of filing: 11.12.2006
(51) Int. Cl.: F24F 1/00

(54) **Indoor unit of air conditioner**
Innenraumeinheit einer Klimaanlage
Unité d'intérieur pour climatiseur

(30) Priority: 07.02.2006 KR 20060011398
(43) Date of publication of application: 08.08.2007
(73) Proprietor: LG Electronics, Inc., Seoul (KR)
(72) Inventor: Kim, Gwang Seok, Gyeongsangnam-do (KR)
(74) Representative: Palmer, Jonathan R.

(56) References cited:
- EP-A1- 1 617 151
- EP-A2- 0 984 227
- EP-A2- 1 271 065
- US-A- 6 018 955

## Description

### Technical Field

The present invention relates to indoor units of air conditioners, and more particularly, to an indoor unit of an air conditioner, in which a picture frame panel is rotated to draw air only when the air conditioner is driven for minimizing introduction of foreign matters into the indoor unit, and which has a motor mount for easy mounting of a motor which rotates the picture frame panel.

### Background Art

In general, the air conditioner, serving as a room heater, a room cooler, or an air purifier for cooling/heating a room, or purifying room air, provides human being a better room environment. Recently, an air conditioner has been developed, which is provided with a turbo-fan to minimize a thickness of a cabinet thereof to permit the air conditioner to be mounted on a wall of the room like a picture frame.

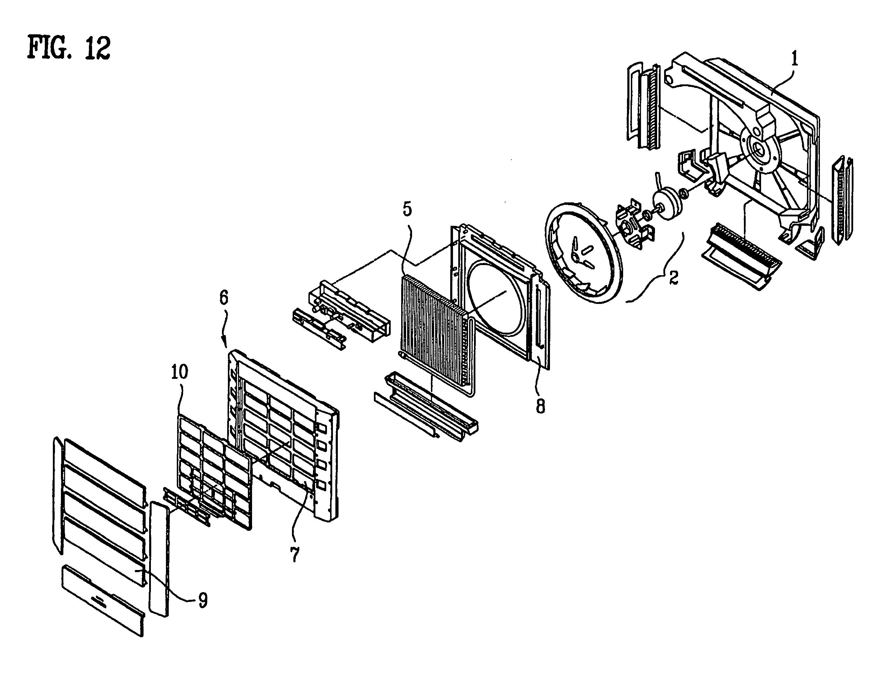

FIG. 12 illustrates an exploded perspective view of an indoor unit of a related art air conditioner. As shown in FIG. 12, the related art indoor unit is provided with a thin and rectangular cabinet 1 having an opened front, a fan 2 in the cabinet 1, a heat exchanger 5 in front of the fan 2, a front panel 6 in front of the heat exchanger 5 having suction openings 7 for drawing air, an orifice 8 between the fan 2 and the heat exchanger 5, and front grills 9 mounted to be rotatable at a predetermined angle to a front plane of the front panel 6 for opening/closing the suction openings 7.

The orifice 8 is between the heat exchanger 5 and the fan 2 for guiding the air from the suction openings 7 to the fan 2. In the meantime, on a front surface of the front panel 6, there is a filter 10 for filtering air drawing thus.

In the meantime, the related art indoor unit has a problem in that the plurality of front grills 9 at the front of the indoor unit fail to be driven accurately due to a complicate structure. Moreover, mounting work of a motor for driving the front grills 9 is not easy.

EP 1271 065 describes an air conditioner including a main chassis receiving various components inside, a heat exchanger installed inside the main chassis so as to exchange heat with a room air, a blow fan installed inside the main chassis so as to suck in and blow out the room air, a front panel attached to a front side of the main chassis and having an intake inlet at a front face so as to make an air flow in the heat exchanger, and an intake panel installed at the front face of the front panel to revolve to move so as to close/open the intake intake selectively, the intake panel installed at the front face of the front panel so as to be detachable.

EP 0984 227 describes an air conditioner where louvers are provided at the suction port in the front panel of the interior-side heat exchange unit, an arm is provided on the side of the rear surface of each of the louvers, and each of those arms is collectively driven by an interlocking plate which is reciprocatively moved linearly through the driving lever by a motor, whereby each louver is interlocked to open and close without the aid of the gear mechanism of pinion-rack.

### Summary of the Invention

It would be desirable to provide an indoor unit of an air conditioner that can rotate a picture frame panel with a simple structure at the time of driving the indoor unit, and has a motor mount that permits easy mounting of a motor for driving the picture frame panel.

Accordingly, the invention provides an indoor unit of an air conditioner according to claim 1 of the invention.

Preferably, the motor fastening portion may be perpendicular to the driving motor shaft, and the panel fastening portion may be parallel to the driving motor shaft.

In the meantime, the driving unit may have the other end passed through the front panel and connected to the picture frame panel.

The driving unit may include a rotating bar having one end connected to the driving motor shaft for transmission of rotation of the driving motor shaft, and a moving bar having one end rotatably connected to the other end of the rotating bar and the other end rotatably connected to the picture frame panel, for rotating the picture frame panel by the rotation transmitted thereto from the rotating bar.

Preferably, the rotating bar has a C shape for minimizing a rotation radius.

In the meantime, the indoor unit may further include a guide unit for guiding the rotation of the picture frame panel.

The guide unit may include a panel arm having one end rotatably connected on to the front panel, and a picture frame arm having one end sliably connected to the other end of the panel arm, and the other end rotatably connected to the picture frame panel.

In another aspect of the present invention, a motor mount includes a body portion for surrounding an outside circumference of the driving motor, a panel fastening portion extended from the body portion, and a motor fastening portion extended from the body portion perpendicular to the panel fastening portion and connected to the driving motor.

Since the motor mount of the present invention permits the fastening member to be driven in a vertical direction toward the back side of the front panel at the time of fastening the driving motor, the fastening member can be driven, easily.

Moreover, since the indoor unit of the air conditioner of the present invention mounts the driving motor mounted on the motor mount on the front panel, the driving motor can be mounted on the front panel, easily.

### Brief Description of Drawings

The accompanying drawings, which are included to provide a further understanding of the invention, illustrate embodiments of the invention and together with the description serve to explain the principle of the invention.

In the drawings:
FIG. 1 illustrates an exploded perspective view of an indoor unit in accordance with a first preferred embodiment of the present invention;
FIG. 2 illustrates an exploded perspective view of the front panel in FIG. 1 having the filter separated therefrom;
FIG. 3 illustrates a perspective view of the front panel in FIG. 2 having the filter mounted thereon;
FIG. 4 illustrates a side view of the filter in FIG. 2;
FIG. 5 illustrates a back side perspective view of the picture frame panel in FIG. 1;
FIG. 6 illustrates a perspective view of a state a picture frame panel is mounted on a front of a front panel of an indoor unit of the present invention;
FIG. 7 illustrates an exploded perspective view of a rotating unit for rotating a picture frame panel (a front panel is omitted from FIG. 7 for convenience sake) in the present invention;
FIG. 8 illustrates an exploded perspective view of a state a driving motor is separated from a back side of a front panel in the present invention;
FIG. 9 illustrates a perspective view of the front panel having the driving motor in FIG. 8 mounted on the back side of the front panel;
FIG. 10 illustrates a side view of a state a picture frame panel is in close contact with a front panel in an indoor unit of the present invention;
FIG. 11 illustrates a side view of a state the picture frame panel in FIG. 10 is rotated by the driving motor; and
FIG. 12 illustrates an exploded perspective view of a related art indoor unit.

### Detailed Description

Reference will now be made in detail to the preferred embodiments of the present invention, examples of which are illustrated in the accompanying drawings. Wherever possible, the same reference numbers will be used throughout the drawings to refer to the same or like parts, and repetitive description of which will be omitted.

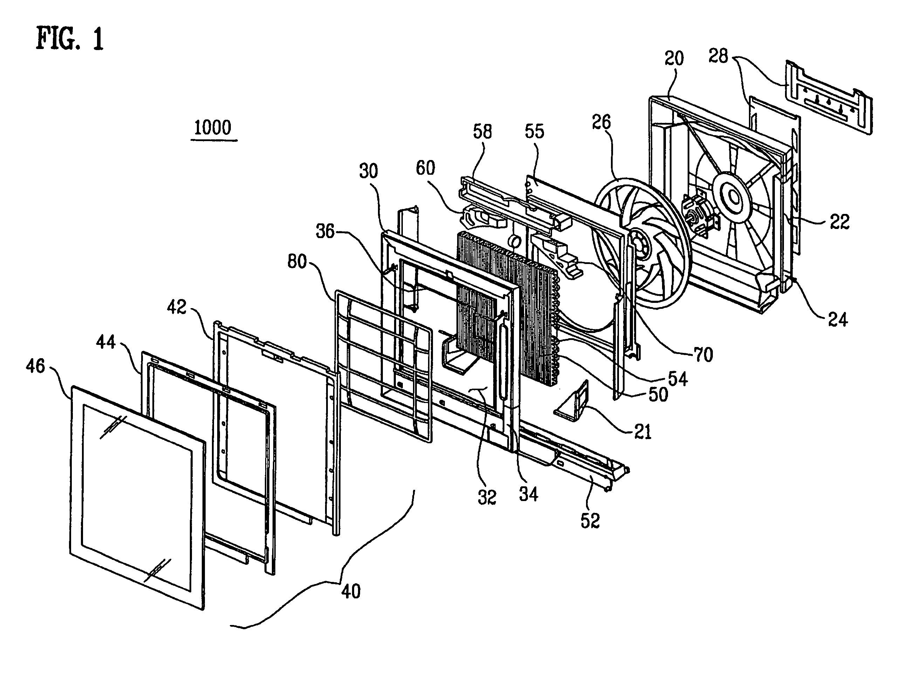

FIG. 1 illustrates an exploded perspective view of an indoor unit in accordance with a first preferred embodiment of the present invention.

Referring to FIG. 1, the indoor unit 1000 of an air conditioner includes a fan 26, a cabinet 20 which is an exterior of the indoor unit 1000 having the fan 26 mounted therein, a heat exchanger 50 in the cabinet 20 for heat exchange with room air, and air guides 60, and 70 for guiding air from the fan 26.

In detail, the indoor unit 1000 includes a front panel 30 on a front of the cabinet 20, and a picture frame panel 40 is rotatably mounted on a front of the front panel 30. When it is intended to drive the indoor unit 1000, the picture frame panel 40 is rotated to form a gap to the front panel 30, and room air is introduced into the indoor unit 1000 through the gap, to make heat exchange with the heat exchanger 50. A rotating structure of the front panel 30 and the picture frame panel 40 will be described in detail, later. In the meantime, the indoor unit of the present invention can be fixedly secured to a wall in the room.

The front panel 30 has a central suction opening 32, and is fastened to the cabinet 20 with fastening means (not shown), such as bolts. The front panel 30 includes the central suction opening 32 and a service cover 34 detachably mounted to one side thereof for shielding a portion of an inside of the cabinet 20.

In front of the front panel 30, there is a front grill 36, and a filter 80 is supported on the front grill 36 and placed in the front panel 30, for filtering air being drawn.

In the meantime, mounted between the front panel 30 and the cabinet 20 in succession, there are a heat exchanger 50 for making heat exchange with air from the suction opening 32 of the front panel 30 to heat/cool the room, an orifice 55 for guiding air being drawn, and a fan 26 for blowing the air. The cabinet 20 has at least one outlet 22 for discharging the air from the fan 26.

The fan 26, between the cabinet 20 and the orifice 55, blows air from the suction opening 32 in the front panel 30 toward the cabinet 20, entirely. The fan 26 may be a centrifugal fan that discharges air from the orifice 55 in a circumferential direction.

The outlet 22 may be formed on both sides of the fan 26, i.e., in both sides of the cabinet 20 for discharging the air from the fan 26 to an outside of the cabinet 20. An outlet unit 24 which is opened/closed by a control unit of the indoor unit 100 is mounted on the outlet 22 in a bottom of the cabinet 20 for discharging air to the room.

In the meantime, the air guides 60, and 70 mounted over the fan 26, i.e., on an upper side of the cabinet 20 guide the air from the fan 26 to the outlets 22 in the both sides of the cabinet 20.

The heat exchanger 50 mounted in front of the orifice 55 heat exchanges with the room air for cooling/heating the room air, and under the heat exchanger 50, there is a drain pan 52 for holding condensed water from the heat exchanger 50. The heat exchanger 50 is fixed to the front panel 30 or the orifice 55, and has a connection pipe 54 at one side for connection to a refrigerant piping (not shown) led from an outside of the indoor unit. In the meantime, the connection pipe 54 of the heat exchanger 50 is hidden under the service cover 34 in the front panel 30 so as not to be shown to an outside of the indoor unit.

In the meantime, mounted to a corner of the cabinet 20, there is a pipe cover 21 to form a portion of an exterior of the indoor unit 100. The pipe cover 21 is mounted to a plurality of places among four corners of the cabinet 20,
wherein the embodiment suggests two covers mounted to two lower corners for leading external refrigerant piping therethrough. An unexplained reference numeral 58 denotes a control box of the control unit of the air conditioner mounted on the orifice 55.

Structures of the front panel 30 and the picture frame panel 40 of the present invention will be described in detail with reference to the drawings.

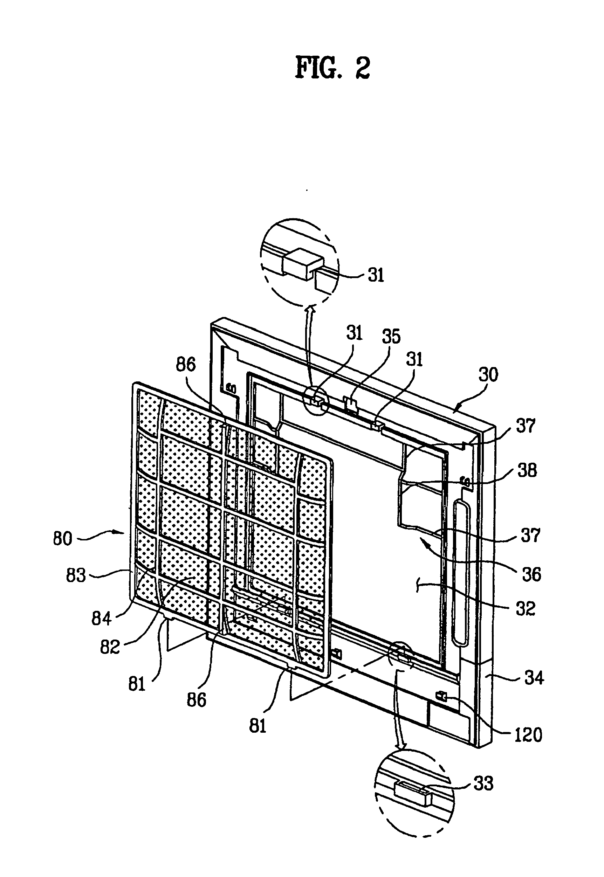

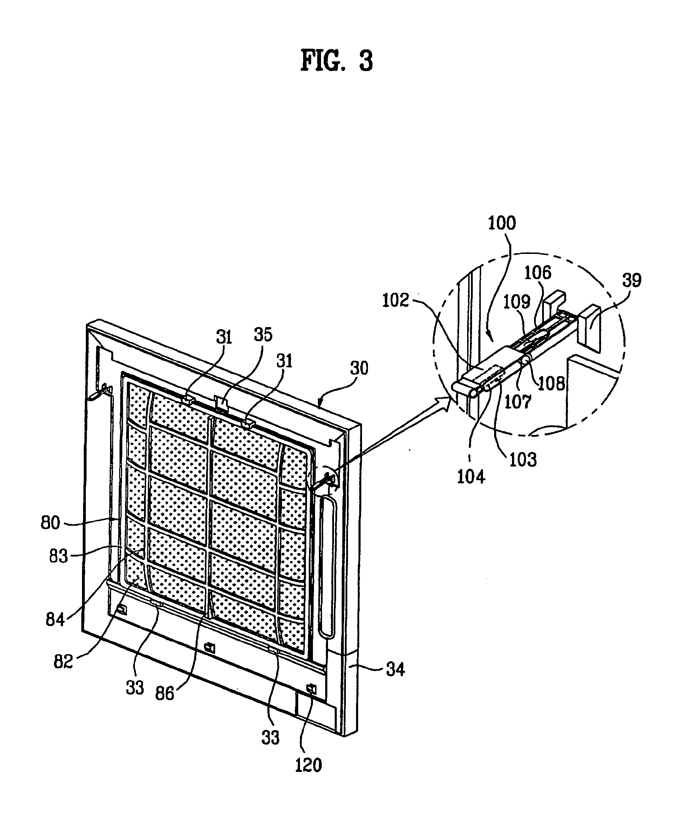

FIG. 2 illustrates an exploded perspective view of the front panel in FIG. 1 having the filter 80 separated the front panel 30 in an indoor unit in accordance with a preferred embodiment of the present invention, and FIG. 3 illustrates a perspective view of the front panel 30 in FIG. 2 having the filter 80 mounted thereon.

Referring to FIGS. 2 and 3, the front panel has a central suction opening 32, and a service cover 34 detachably mounted to one side of the front panel 30 for covering a portion of an inside of the cabinet 20. The service cover 20 forms a portion of an exterior of the front panel 30 and is detachably mounted to the front panel 30, and in the embodiment, is fastened thereto with fastening means like bolts (not shown). The service cover 34, mounted to the front panel 30 to be positioned on an outer side of the connection pipe 54 (see FIG. 1) of the heat exchanger 50 (see FIG. 1), prevents the connection pipe 54 from exposing to an outside of the indoor unit.

On a front of the front panel 30, a front grill 36 is formed for directing the room air introduced thereto through the suction opening 32 toward the orifice 55 (see FIG. 1), and a filter 80 is mounted to the suction opening 32 for filtering the room air directed to the orifice 55. The front grill 36 extends from an edge of the suction opening 32 of the front panel 30 toward a center thereof, and is designed to have a minimum area for reducing resistance to the air flowing through the suction opening 32. In the embodiment, the front grill 36 is formed an upper portion and opposite portions of the suction opening 32. In the meantime, in the present invention, the filter 80 is supported on the front grill 36 of the front panel 30 so as to be detachable from the front panel 30.

The filter 80 and the front grill 36 which supports the filter 80 are projected forward from the front panel 30, i.e., projected toward the picture frame panel 40, moderately.

Accordingly, the front grill 36 has a central portion 38 of the suction opening 32 projected forward more than an edge portion 37 directly connected to the front panel 30. That is, the central portion 38 of the front grill 36 is positioned nearer to the picture frame panel 40 than the edge portion 37, making the central portion 38 to be positioned farther from the heat exchanger 50 in rear of the front panel 30 than the edge portion 37. This structure prevents the filter 80 seated on the front grill 36 from being brought into contact with the heat exchanger 50. In the meantime, in the front grill 36, the edge portion 37 and the central portion 38 may be connected with a moderate slope, and preferably, in the embodiment, the edge portion 37 and the central portion 38 are connected such that bent portions each projected forward are formed at a middle of the edge portion 37 and the central portion 38.

In order to hold the filter 80 in position, there are stoppers 31 and slots 33 at the edge of the suction opening 32 of the front panel 30 as means for holding the filter 80, and the filter 80 has projections 81 at a bottom of the filter 80 in correspondence to the slots 33. In detail, an upper edge of the filter 80 is placed on inner sides of the stoppers 31 at the upper side of the suction opening 32 of the front panel 30, and the projections 81 at the bottom of the filter 80 are placed in, and held by the slots 33 at a lower side of the suction opening 32 respectively, to secure the filter 80 to the front panel 30. The stopper 31 has a hook shape which surrounds an upper edge of the filter 80, to surround an outer side of the filter 80 preventing the filter 80 from separating from the front panel 30. The slots 33 in the front panel 30 has an opened top side for placing the projection 81 therein, and the slot 33 is formed in front of the front panel 30 for preventing the filter 80 for being positioned close to the heat exchanger 50.

In the meantime, the filter 80 includes a filter frame 83 coupled to and supported on the front panel 30, and a filter mesh 82 secured to the filter frame 83 for filtering foreign matters from the room air passing through the filter 80. The filter frame 83 has a size and shape in conformity with the suction opening 32 and mounted close to the front panel 30 along the edges of the suction opening 32. In this case, though the filter 80 covers the suction opening 32, the filter 80 does not cover the service cover 34. In the embodiment, the filter frame 83 is square in conformity with the suction opening 32, with a plurality of ribs 84 crossing one another. The plurality of ribs 84 crossing one another enhances an entire stiffness of the filter 80.

In the meantime, the ribs 84 on the filter frame 83 have central portions projected forward with moderate slopes. Accordingly, the ribs 84 on an inner side of the filter frame 83 have central portions projected forward more than the filter frame 83 on the whole to form a bulged shape. In order to minimize a contact area with the air passing through the filter 80, the ribs 84 has a shape identical to the front grill 36 of the front panel 30, and the ribs 84 on an inner side of the filter frame 83 are seated, and supported on the front grill 36. At the end, owing to the bulged central portions of the ribs 84 compared to the filter frame 83, contact of the filter 80 to the heat exchanger 50 is suppressed, and an area of the filter mesh 82 is increased compared to a planer filter.

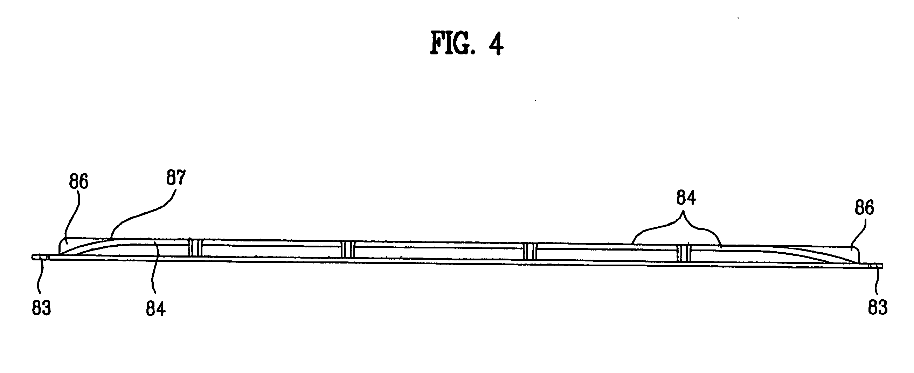

In the meantime, FIG. 4 illustrates a side view of the filter 80.

Referring to FIG. 4, the filter frame 83 has supporting portions 86 formed thereon for preventing the bulged ribs 84 from being deformed pressed down by the picture frame panel 40 or the like. The supporting portions 86 are formed at connection portions of the filter frame 83 and the ribs 84, respectively. As shown in FIG. 4, the supporting portions 86 formed in the embodiment are projected forward from the filter frame 83, as much as a difference of heights at the center of the filer frame 83 and the ribs 84. That is, the supporting portions 86 are formed starting from the filter frame 83 following the ribs 84 such that an end portion 87 thereof has a height the same with the central portion of the ribs 84. Though two supporting portions 86 are shown in the drawing, a number of the supporting portion 86 is not limited to two, but only one supporting portion 86 may be formed.

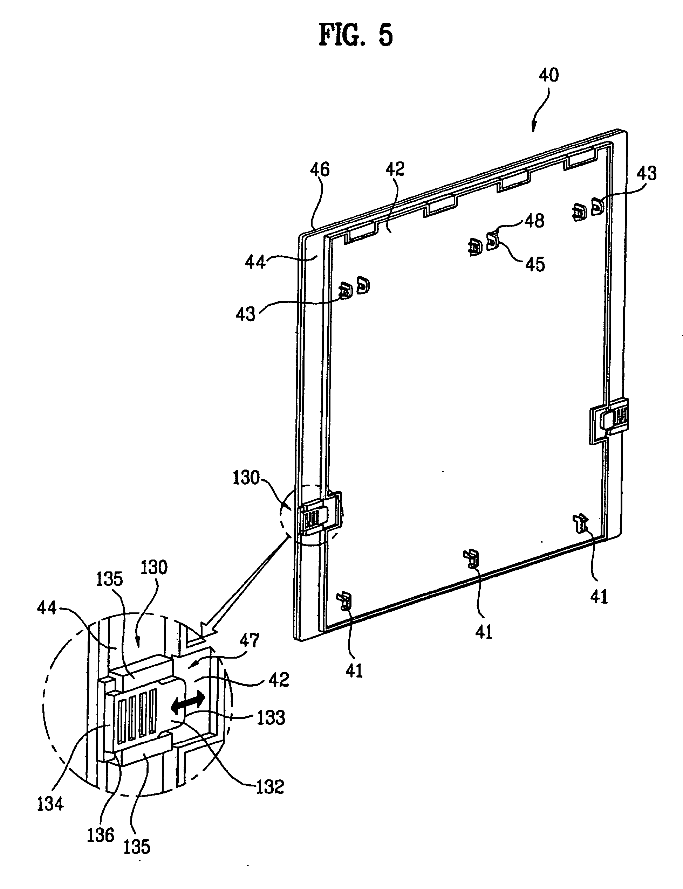

In the meantime, referring to FIGS. 2 and 3 again, at a lower portion of the front of the front panel 30, there are a plurality of journals 120 formed thereon to be connected to hinge shafts 41 (see FIG. 5) of the picture frame panel 40 described later respectively, to serve as hinge shafts when the picture frame panel 40 is rotated. An unexplained reference numeral 100 in FIG. 3 denotes a guide unit for guiding rotation of the picture frame panel 40, which will be described later.

FIG. 5 illustrates a back side perspective view of the picture frame panel of the present invention.

Referring to FIG. 5, the picture frame panel 40 includes a picture frame base 42 hinged on the front panel 30, a deco-frame 44 hinged in front of the picture frame base 42, and a transparent plate 46 attached to a front surface of the deco-frame 44.

The transparent plate 46 is formed of transparent acryl, or glass, to show a photograph or picture to be attached to the picture frame base 42 for appreciation.

In the meantime, the deco-frame 44 has an empty square and a front surface attached to the transparent plate 46. The deco-frame 44 has a top edge hinged on the picture frame base 42, for turning around the hinge at the top. Accordingly, the user can rotate the deco-frame 44 for replacement of the photograph or the picture attached to the picture frame base 42.

In the meantime, the picture frame panel 40 has picture frame fastening units 130 on a back side for fastening the deco-frame 44 to the picture frame base 42 for preventing the deco-frame from rotating. As shown in a partial enlarged drawing in FIG. 5, the picture frame fastening unit 130 includes a fastening member 132 movably mounted on the back side of the deco-frame 44, and a guide member 135 on he back side of the deco-frame 44 for guiding a moving direction of the fastening member 132.

The fastening member 132 has a plate shape, with top/bottom edges placed in grooves 136 in the guide member 135, for guiding the fastening member 132 in left/right direction along an arrow mark. Therefore, if one end of the fastening member 132 moves toward a recess 47 in the back side of the picture frame base 42, since the one end of the fastening member 132 is brought into close contact to the back side of the picture frame base 42, while the other end 134 is connected to the deco-frame still, the fastening member 132 can prevent the deco-frame 44 from rotating with respect to the picture frame base 42.

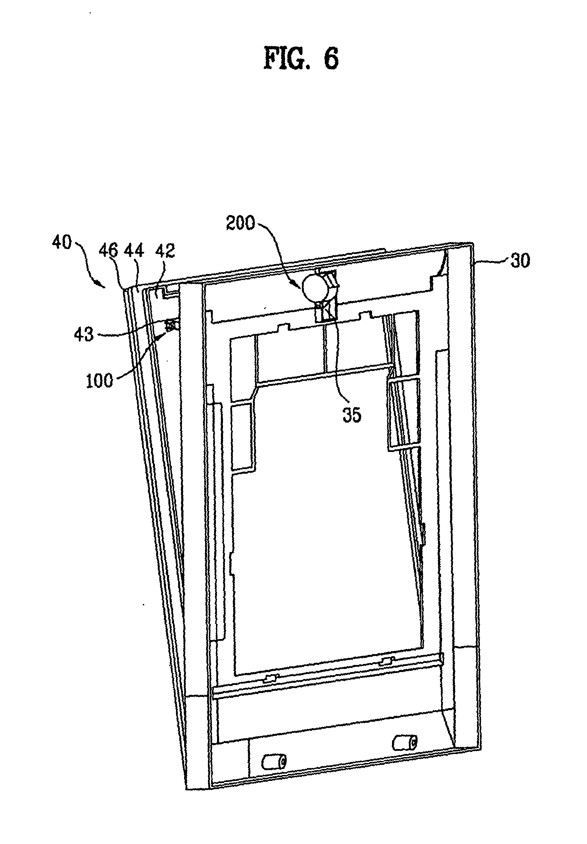

In the meantime, on the back side of the picture frame base 42, there are guide brackets 43 to be engaged with the guide units 100 (see FIG. 3) on the front panel 30 (see FIG. 3) respectively, rotating brackets 45 to be engaged with a rotating units 200 (see FIG. 6) for rotating the picture frame panel 40, and hinge shafts 41 for the picture frame panel 40 to turn therearound.

There are a plurality of the hinge shafts 41 at a lower side of the back side of the picture frame panel 40, for seating on the journals 120 (see FIG. 2) on a lower side of the front of the front panel 30 for serving as rotation shafts when the picture frame panel 40 rotates.

In the meantime, the guide units 100 are engaged with the guide brackets 43 on the upper side of the back side of the picture frame base 42. The guide unit 100 has opposite ends hinged to the bracket 39 (see FIG. 3) on the front of the front panel 30, and the guide bracket 43 on the back side of the picture frame panel 40, respectively.

Referring to FIGS. 3 and 5, the guide unit 100 includes a picture frame arm 102 hinged on the guide bracket 43 of the picture frame panel 40, and a panel arm 106 hinged on the bracket 39 of the front panel 30, such that the picture frame arm 102 and the panel arm 106 slide with respect to each other.

The panel arm 106 has a guide projection 108 at one end 107, and the picture frame arm 102 has a guide groove 103 for the guide projection 108 to move therein. Accordingly, if the guide projection 108 is placed in the guide groove 103 of the picture frame arm 102, such that the picture frame arm 102 and the panel arm 106 slide with respect to each other, to rotate the picture frame panel 40, a total length of the guide unit 100 is varied. That is, if the picture frame panel 40 rotates such that one end of the picture frame panel 40 moves away from the front panel 30, the picture frame arm 102 and the panel arm 106 slide with respect to each other increasing a length of the guide unit 100, and rotation of the picture frame panel 40 beyond the increased length of the guide unit 100 is prevented. Opposite to this, if the picture frame panel 40 rotates until the picture frame panel 40 is in close contact to the front panel 30, the picture frame arm 102 and the panel arm 106 slide with respect to each other until the picture frame arm 102 and the panel arm 106 overlap with each other, reducing the length of the guide unit 100.

In the meantime, the picture frame arm 102 has a projection 104 therein in a length direction of the guide groove 103, and the panel arm 106 has a hole 109 therein for placing the projection therein, for guiding the sliding of the picture frame arm 102 and the panel arm 106 doubly together with the guide groove 103.

Therefore, in a case the picture frame panel 40 is rotated by the rotating units 200, the guide units 100 enable accurate rotation of the picture frame panel 40 and, moreover, rotation beyond the length of the guide units 100 is prevented.

FIG. 6 illustrates the picture frame panel 40 connected to, and rotates around a bottom of the front panel 30.

Referring to FIG. 6, the front panel 30 and the picture frame panel 40 are connected with the guide units 100 at opposite upper side edges, and with the rotating unit 200 at a center of an upper side. The rotating unit 200 rotates the picture frame panel 40 with respect to the front panel 30, which will be described with reference to the drawings.

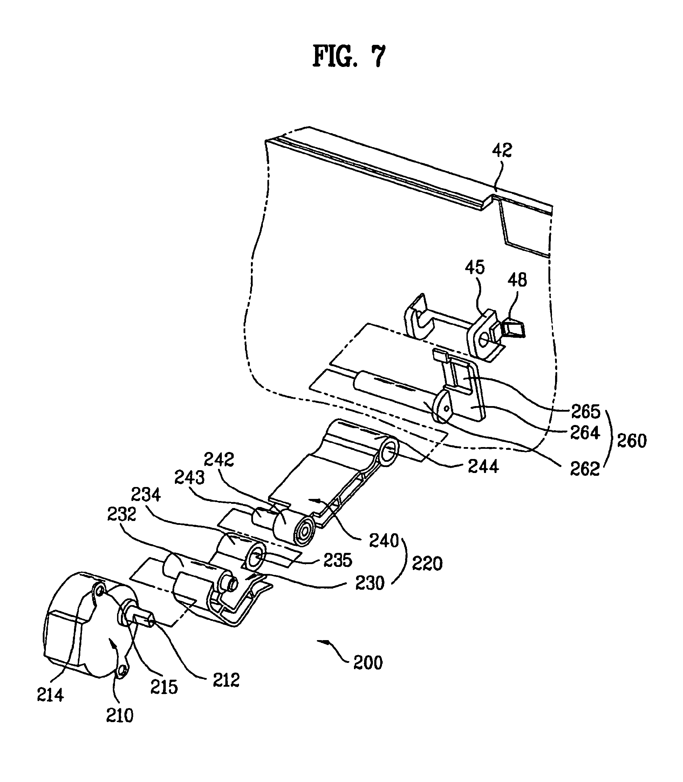

FIG. 7 illustrates an exploded perspective view of the rotating unit 200 wherefrom the front panel 30 is omitted for convenience sake.

Referring to FIG. 7, the rotating unit 200 includes a driving motor 210 to be mounted on the back side of the front panel 30 (see FIG. 6), and a driving unit 220 having one end connected to a driving motor shaft 212 of the driving motor 210, and the other end connected to the picture frame panel 40.

Preferably, the driving motor 210 is a step driving motor for rotating the driving motor shaft 212 by a predetermined angle depending on a current applied from the control unit.

In the meantime, the driving unit 220 includes a rotating bar 230 having one end connected to the driving motor shaft 212 for transmission of rotation of the driving motor shaft 212, and a moving bar 240 having one end rotatably connected to the other end of the rotating bar 230 and the other end rotatably connected to the picture frame panel 40 for rotating the picture frame panel 40 by the rotation transmitted thereto from the rotating bar 230.

The one end 232 of the rotating bar 230 is connected to the driving motor shaft 212 of the driving motor 210, such that the rotating bar 230 rotates around the one end 232 following rotation of the driving motor shaft 212. It is preferable that the rotating bar 230 has a plurality of bent portions for reducing a rotating radius around the driving motor shaft 212 when the rotating bar 230 is rotated. In the embodiment, the rotating bar 230 is bent in a C shape, such that the one end 232 and the other end 234 direct the same direction.

In the meantime, the moving bar 240 has one end 242 rotatably hinged on the other end 234 of the rotating bar 230, and the other end 244 rotatably hinged on the rotating bracket 45 on the picture frame base 42. That is, the other end 244 of the moving bar 240 is placed in the bracket 45 of the picture frame base 42 and fastened with a fastening pin 260. The fastening pin 260 includes a pin portion 262 designed to pass through the other end 244 of the moving bar 240 and the bracket 45, and a fastening portion 264 at one side of the pin portion 262 designed to be held at the back side of the picture frame panel 40. The fastening portion 264 of the fastening pin 260 has a rectangular hole 265 for placing a projection 48 on the back side of the picture frame panel 40 to hold each other.

In this structure, if the rotating bar 230 is rotated by the driving motor shaft 212, the other end 234 of the rotating bar 230 moves toward the picture frame panel 40. In this case, the one end 242 of the moving bar 240 moves toward the picture frame panel 40 while rotating relative to the other end of the rotating bar 230, to rotate the picture frame panel 40. In this case, it is preferable that the moving bar 240 moves slowly for sustaining a load of the picture frame panel 40.

In the meantime, referring to FIG. 7, the driving motor 210 is mounted on the back side of the front panel 30, and the rotating bar 230 connected to the driving motor shaft 212 of the driving motor 210 and the moving bar 240 are passed through the pass through hole 35 (see FIG. 3) in the front panel 30 and connected to the picture frame panel 40.

A structure for mounting the driving motor 210 to the back side of the front panel 30 will be described with reference to the drawings.

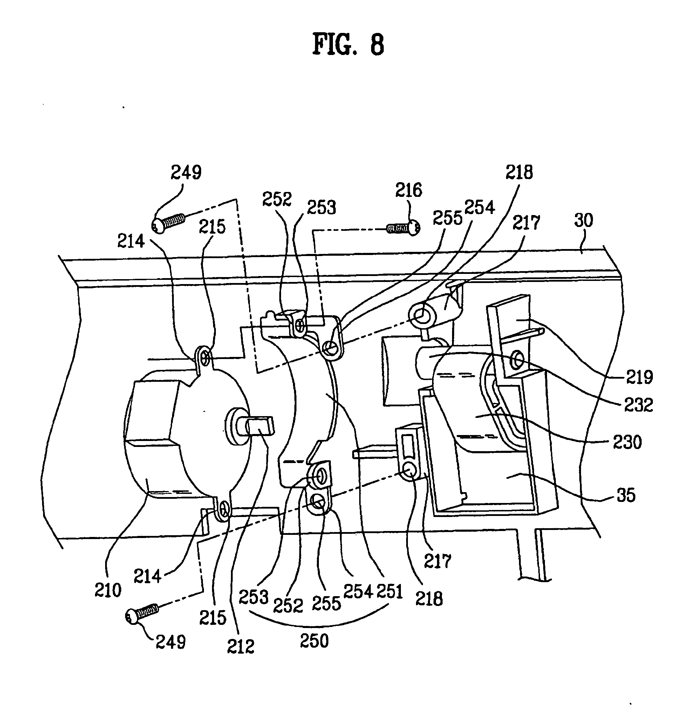

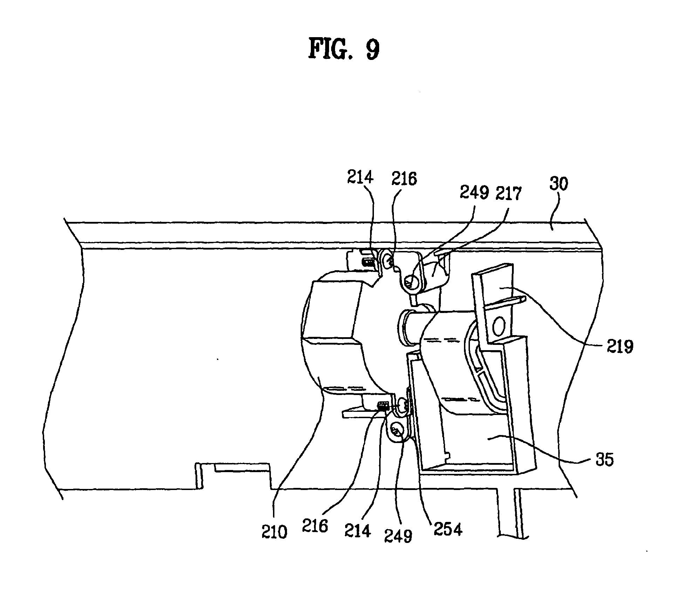

FIG. 8 illustrates an exploded perspective view of a state the driving motor 210 is separated from the back side of the front panel 30 in the present invention, and FIG. 9 illustrates a perspective view of the front panel 30 having the driving motor 210 mounted on the back side of the front panel 30.

Referring to FIGS. 8 and 9, in the embodiment, the driving motor 210 is mounted on the back side of the front panel 30 with a motor mount 250. That is, the driving motor 210 is fastened to the motor mount 250, and the motor mount 250 with the driving motor 210 is fixedly secured to the back side of the front panel 30.

The motor mount 250 includes a body portion 251 for surrounding an outside circumference of the driving motor 210, a panel fastening portion 254 extended parallel to the back side of the front panel 30 for fastening to the front panel 30, and a motor fastening portion 252 extended from the body portion 251 perpendicular to the panel fastening portion 254 and connected to a flange 214 of the driving motor 210.

The body portion 251 of the motor mount 250 is designed to surround the outside circumference of the driving motor 210, and the motor fastening portion 252 and the panel fastening portion 254 are projected from one side of the body portion 251, such that planes of the motor fastening portion 252 and the panel fastening portion 254 are perpendicular to each other.

In this instance, the driving motor 210 is seated on the body portion 251 of the motor mount 250 such that the driving motor shaft 212 is parallel to the back side of the front panel 30. Accordingly, the fastening hole 215 in the flange 214 of the driving motor 210 is also parallel to the back side of the front panel 30, and the motor fastening portion 252 of the motor mount 250 is opposite to the flange 214 so that the motor fastening portion 252 is fastened to the flange 214 of the driving motor 210. That is, the motor fastening portion 252 is perpendicular to the driving motor shaft 212, and the fastening hole 253 in the motor fastening portion 252 is in a left/right direction, i.e., parallel to the back side of the front panel 30 such that the fastening hole 253 is opposite to the flange 214 of the driving motor 210.

In the meantime, the panel fastening portion 254 of the motor mount 250 is perpendicular to the motor fastening portion 252, i.e., parallel to the driving motor shaft 212 of the driving motor 210. In the embodiment, the panel fastening portion 254 of the motor mount 250 is opposite to the back side of the front panel 30 so that the panel fastening portion 254 is in close contact with the back side of the front panel 30. Accordingly, the fastening hole 255 in the panel fastening portion 254 is in a front/rear direction, i.e., perpendicular to the back side of the front panel 30.

A process of mounting the rotating unit of the present invention will be described with reference to FIGS. 8 and 9.

The flange 214 of the driving motor 210 and the motor fastening portion 252 of the motor mount 250 are aligned, and a fastening member 216, such as a bolt, is fastened to the fastening holes 215 and 253, to secure the driving motor 210 to the motor mount 250. In this case, the driving motor 210 is seated on the body portion 251 of the motor mount 250.

Then, the driving motor 210 secured to the motor mount 250 is transferred to an assembly site of the indoor unit of the present invention. That is, the driving motor 210 is introduced into an assembly process of the indoor unit in a state the driving motor 210 is mounted on the motor mount 250.

After transferring the driving motor 210, the driving motor shaft 212 of the driving motor 210 is connected to the one end of the rotating bar 230, to assemble the driving motor 210 and the rotating bar 230. In this case, the driving motor shaft 212 of the driving motor 210 is connected to one side of the one end 232 of the rotating bar 230, and the other end of the one end 232 of the rotating bar 230 is placed in, and hinged on the bracket 219 on the back side of the front panel 30.

Then, the fastening hole 255 of the panel fastening portion 254 is aligned with a boss 217 on the front panel 30 and the front panel 30 and the motor mount 250 are fastened together with a fastening member 249, such as a bolt. In this case, the worker puts the front panel 30 on a working table for assembly, wherein the front panel 30 has the back side facing upward to the worker, so that the worker can fasten the fastening member 249 in a vertical direction, easily. That is, the driving motor 210 and the motor mount 250 are delivered to the worker in a state the driving motor 210 and the motor mount 250 are assembled, and the worker puts the panel fastening portion 254 of the motor mount 250 to the boss 206 closely, and fastens the fastening member 249 in the vertical direction.

As described before, the motor fastening portion 252 of the motor mount 250 is perpendicular to the panel fastening portion 254, even if the driving motor shaft 212 of the driving motor 210 is secured to the motor fastening portion 252 in parallel to the back side of the front panel 30, the worker can drive the fastening member 249 in the vertical direction easily after the panel fastening portion 254 of the motor mount 250 is aligned with the boss 206 of the front panel 30. Moreover, in the case the back side of the front panel 30 faces upward placed on the working table for assembly, since the panel fastening portion 254 on the motor mount 250 faces the worker directly, not only enabling the worker to identify a position of the assembly easily, but also preventing the front panel 30 from moving pushed during fastening of the fastening member 249.

After the driving motor 210 is mounted on the back side of the front panel 30, the worker connects the driving unit 220 thereto, which will be described in detail, with reference to FIG. 7.

As described before, if the one end 232 of the rotating bar 230 is connected to the driving motor 210, the other end 234 thereof is projected, and exposed beyond the front of the front panel 30 through the pass through hole 35 (see FIG. 3).

In this state, the worker connects the other end 244 of the moving bar 240 to the rotating bracket 45 of the picture frame base 42. In this case, the worker places the other end 244 of the moving bar 240 in the rotating bracket 45, and places the pin portion 262 of the fastening pin 260 in, and through the other end 244 of the moving bar 240 and the bracket 45. Then, the worker turns the fastening portion 264 of the fastening pin 260 forward, to place the projection 48 in the hole 265 in the fastening portion 264. That is, by fastening the fastening portion 264 to the fastening projection 264, the moving bar 240 is hinged on the picture frame base 42.

Then, the worker places the pin 243 on the one end 242 of the moving bar 240 in the hole 235 in the other end 234 of the rotating bar 230, connecting the moving bar 240 and the rotating bar 230 with a hinge, to finish assembly of the rotating unit 200.

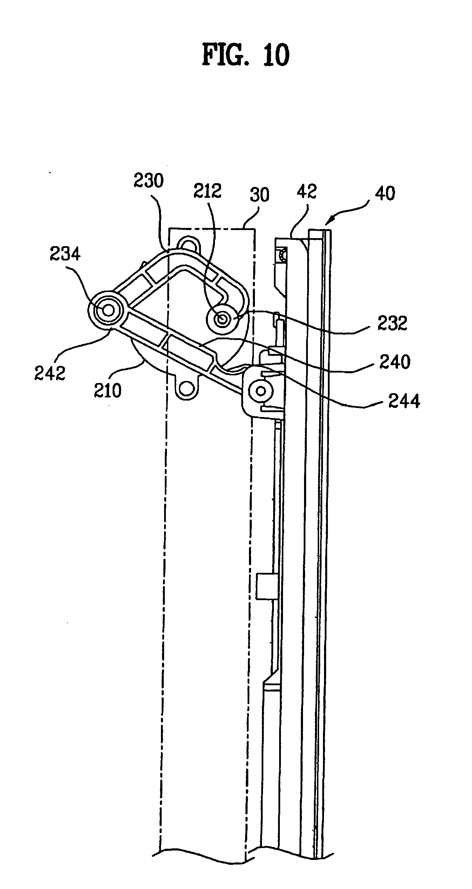

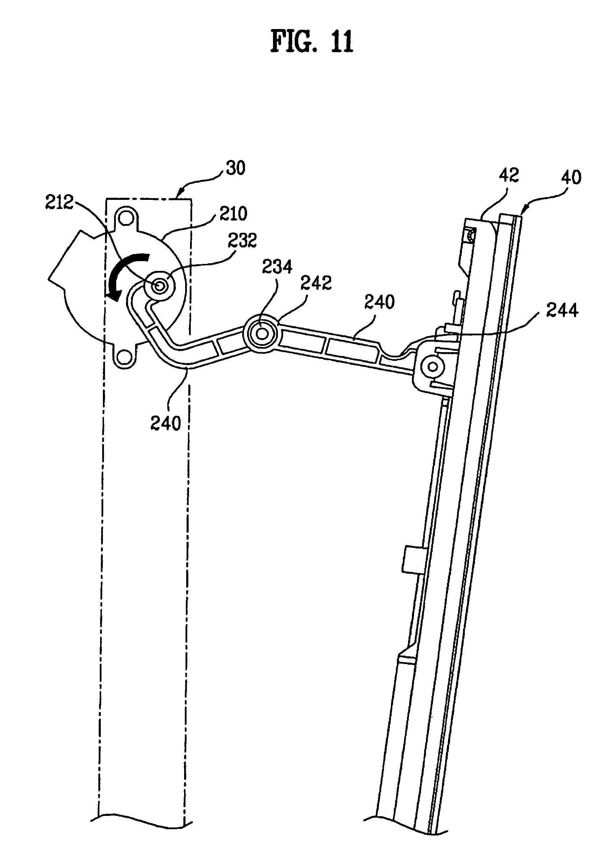

The operation of the rotating unit of the present invention will be described in detail with reference to FIGS. 10 and 11.

FIG. 10 illustrates a side view of a state the picture frame panel 40 is in close contact with the front panel 30.

The state in FIG. 10 can be a stationary state of the air conditioner. That is, if the air conditioner is put into operation, the picture frame panel 40 is brought into close contact with the front of the front panel 30, closing the suction opening 32 in the front panel 30.

In the meantime, FIG. 11 illustrates a state the picture frame panel 40 is rotated forward, which can be a state the air conditioner is in operation. That is, during operation of the air conditioner, the indoor unit is turned to a state the indoor unit draws/discharges the room air easily, and the control unit of the indoor unit applies a current to the driving motor 210, to rotate the driving motor shaft 212 in an arrow mark direction, i.e., a counter clockwise direction.

In this case, the rotating bar 230, connected to the driving motor shaft 212, rotates in a counter clockwise direction the same with the driving motor shaft 212, to make the other end 234 of the rotating bar 230 to move toward the picture frame panel 40. The moving bar 240, connected to the rotating bar 230, moves forward in proportion to a projected distance of the other end 234 of the rotating bar 230, rotating the picture frame panel 40, accordingly. In this case, since the hinge shafts 41 on the lower side of the front panel 30 are seated on the journals 120 on the lower side of the front panel 30, a top side of the picture frame panel 40 rotates forward around the hinge shafts 41.

In the meantime, a center of gravity of the picture frame panel 40 is in front of the hinge shafts 41, and the picture frame panel 40 is supported on the motor mount 250 connected to the moving bar 240, the rotating bar 230 and the driving motor 210.

Opposite to this, if the indoor unit is stationary, the control unit rotates the driving motor shaft 212 of the driving motor 210 in a clockwise direction, to put the top side of the picture frame panel 40 close to the front panel 30. Since this process is opposite to the process described before, detailed description of this process will be omitted.

## Claims

1. An indoor unit (1000) of an air conditioner comprising:
a front panel (30);
a picture frame panel (40) mounted in front of the front panel, the picture frame panel being rotatably connected to the front panel and including
a rotating unit (200) for rotating the picture frame panel at a predetermined angle with respect to the front panel, the rotating unit including a driving motor mounted on one side of the front panel, and a driving unit having one end connected to a driving motor shaft of the driving motor and the other end connected to the picture frame panel for rotating the picture frame panel following rotation of the driving motor shaft; and
a motor mount (250) for mounting the driving motor on a back side of the front panel,
the motor mount (250) includes **characterized in that** :
a body portion (251) for surrounding an outside circumference of the driving motor,
a panel fastening portion (254) extended parallel to the back side of the front panel for fastening to the front panel, and
a motor fastening portion (252) extended from the body portion perpendicular to the panel fastening portion and connected to the driving motor.

2. The indoor unit as claimed in claim 1, wherein the motor fastening portion is perpendicular to the driving motor shaft, and the panel fastening portion is parallel to the driving motor shaft.

3. The indoor unit as claimed in claim 1, wherein the driving unit has the other end passed through the front panel and connected to the picture frame panel.

4. The indoor unit as claimed in claim 1, wherein the driving unit includes;
a rotating bar having one end connected to the driving motor shaft for transmission of rotation of the driving motor shaft, and
a moving bar having one end rotatably connected to the other end of the rotating bar and the other end rotatably connected to the picture frame panel, for rotating the picture frame panel by the rotation transmitted thereto from the rotating bar.

5. The indoor unit as claimed in claim 4, wherein the rotating bar has a C shape.

6. The indoor unit as claimed in claim 1, further comprising a guide unit for guiding the rotation of the picture frame panel.

7. The indoor unit as claimed in claim 6, wherein the guide unit includes :
a panel arm having one end rotatably connected on to the front panel, and
a picture frame arm having one end slidably connected to the other end of the panel arm, and the other end rotatably connected to the picture frame panel.

## Patentansprüche

1. Innenraumeinheit (1000) einer Klimaanlage, umfassend:
eine Frontplatte (30);
eine Bildrahmenplatte (40), die vor der Frontplatte angebracht ist, wobei die Bildrahmenplatte mit der Frontplatte drehbar verbunden ist und enthält:
eine Dreheinheit (200) zum Drehen der Bildrahmenplatte um einen vorbestimmten Winkel in Bezug auf die Frontplatte, wobei die Dreheinheit einen Antriebsmotor, der an einer Seite der Frontplatte angebracht ist,
und eine Antriebseinheit, deren eines Ende mit einer Antriebsmotorwelle des Antriebsmotors verbunden ist und deren anderes Ende mit der Bildrahmenplatte verbunden ist, um die Bildrahmenplatte infolge einer Drehung der Antriebsmotorwelle zu drehen, enthält; und
ein Motorlager (250) zum Anbringen des Antriebsmotors an einer Rückseite der Frontplatte,
**dadurch gekennzeichnet, dass** das Motorlager (250) enthält:
einen Körperabschnitt (251), um einen Außenumfang des Antriebsmotors zu umschließen,
einen Plattenbefestigungsabschnitt (254), der sich parallel zur Rückseite der Frontplatte erstreckt, um die Frontplatte zu befestigen, und
einen Motorbefestigungsabschnitt (252), der sich von dem Körperabschnitt senkrecht zum Plattenbefestigungsabschnitt erstreckt und mit dem Antriebsmotor verbunden ist.

2. Die Innenraumeinheit nach Anspruch 1, worin der Motorbefestigungsabschnitt senkrecht zur Antriebsmotorwelle ist und der Plattenbefestigungsabschnitt parallel zur Antriebsmotorwelle ist.

3. Die Innenraumeinheit nach Anspruch 1, worin das andere Ende der Antriebseinheit durch die Frontplatte hindurchgeht und mit der Bildrahmenplatte verbunden ist.

4. Die Innenraumeinheit nach Anspruch 1, worin die Antriebseinheit enthält:
eine Drehstange, deren eines Ende mit der Antriebsmotorwelle verbunden ist, um eine Drehung der Antriebsmotorwelle zu übertragen, und
eine Bewegungsstange, deren eines Ende mit dem anderen Ende der Drehstange drehbar verbunden ist und deren anderes Ende mit der Bildrahmenplatte drehbar verbunden ist, um durch die von der Drehstange auf sie übertragene Drehung die Bildrahmenplatte zu drehen.

5. Die Innenraumeinheit nach Anspruch 4, worin die Drehstange C-förmig ist.

6. Die Innenraumeinheit nach Anspruch 1, die ferner eine Führungseinheit aufweist, um die Drehung der Bildrahmenplatte zu führen.

7. Die Innenraumeinheit nach Anspruch 6, worin die Führungseinheit enthält:
einen Plattenarm, dessen eines Ende mit der Frontplatte drehbar verbunden ist, und
einen Bildrahmenarm, dessen eines Ende mit dem anderen Ende des Plattenarms verschiebbar verbunden ist, und dessen anderes Ende mit der Bildrahmenplatte drehbar verbunden ist.

## Revendications

1. Unité intérieure (1000) de climatiseur comprenant :
un panneau avant (30) ;
un panneau de cadre (40) monté devant le panneau avant, le panneau de cadre étant raccordé rotatif au panneau avant et comprenant :
une unité rotative (200) pour faire tourner le panneau de cadre selon un angle prédéterminé relativement au panneau avant, l'unité rotative comprenant un moteur d'entraînement monté sur un côté du panneau avant, et une unité d'entraînement ayant une extrémité reliée à un arbre de moteur d'entraînement du moteur d'entraînement et l'autre extrémité reliée au panneau de cadre pour faire tourner le panneau de cadre suivant la rotation de l'arbre de moteur d'entraînement ; et
un support de moteur (250) pour monter le moteur d'entraînement sur un côté arrière du panneau avant,
**caractérisé en ce que** le support de moteur (250) comprend :
une partie corps (251) pour entourer une circonférence extérieure du moteur d'entraînement,
une partie de fixation de panneau (254) s'étendant parallèlement au côté arrière du panneau avant pour fixation au panneau avant, et
une partie fixation de moteur (252) s'étendant depuis la partie corps, perpendiculairement à la partie de fixation de panneau et raccordée au moteur d'entraînement.

2. Unité intérieure selon la revendication 1, dans laquelle la partie fixation de moteur est perpendiculaire à l'arbre de moteur d'entraînement, et la partie fixation de panneau est parallèle à l'arbre de moteur d'entraînement.

3. Unité intérieure selon la revendication 1, dans laquelle l'unité d'entraînement a son autre extrémité passée à travers le panneau avant et reliée au panneau de cadre.

4. Unité intérieure selon la revendication 1, dans laquelle l'unité d'entraînement comprend :
une barre rotative ayant une extrémité reliée à l'arbre de moteur d'entraînement pour transmission de rotation de l'arbre de moteur d'entraînement, et
une barre mobile ayant une extrémité reliée en rotation à l'autre extrémité de la barre rotative et l'autre extrémité reliée en rotation au panneau de cadre, pour faire tourner le panneau de cadre par la rotation qui lui est transmise depuis la barre rotative.

5. Unité intérieure selon la revendication 4, dans laquelle la barre rotative est en forme de C.

6. Unité intérieure selon la revendication 1, comprenant, en outre, une unité de guidage pour guider la rotation du panneau de cadre.

7. Unité intérieure selon la revendication 6, dans laquelle l'unité de guidage comprend :
un bras de panneau ayant une extrémité reliée en rotation au panneau avant, et
un bras de cadre ayant une extrémité reliée en coulissement à l'autre extrémité du bras de panneau, et l'autre extrémité reliée en rotation au panneau de cadre.
